## Europäisches Patentamt
## European Patent Office
## Office européen des brevets

(19)

(11) Veröffentlichungsnummer : **0 325 136 B1**

(12)

# EUROPÄISCHE PATENTSCHRIFT

(45) Veröffentlichungstag der Patentschrift :
**17.06.92 Patentblatt 92/25**

(51) Int. Cl.$^5$ : **H02M 5/45,** H02P 7/62

(21) Anmeldenummer : **89100282.6**

(22) Anmeldetag : **09.01.89**

(54) **Entladeschaltung für eine Zwischenkreisbatterie eines Spannungszwischenkreisumrichters.**

(30) Priorität : **19.01.88 DE 3801393**

(43) Veröffentlichungstag der Anmeldung :
**26.07.89 Patentblatt 89/30**

(45) Bekanntmachung des Hinweises auf die
Patenterteilung :
**17.06.92 Patentblatt 92/25**

(84) Benannte Vertragsstaaten :
**DE FR GB IT SE**

(56) Entgegenhaltungen :
**EP-A- 0 013 615**
**DE-A- 3 136 694**
**US-A- 4 545 464**

(73) Patentinhaber : **SIEMENS**
**AKTIENGESELLSCHAFT**
**Wittelsbacherplatz 2**
**W-8000 München 2 (DE)**

(72) Erfinder : **Springmann, Walter, Dipl.-Ing.**
**Lerchenstrasse 12**
**W-8520 Erlangen (DE)**
Erfinder : **Speth, Friedrich, Dipl.-Ing.(FH)**
**Am Europakanal 2**
**W-8520 Erlangen (DE)**

EP 0 325 136 B1

## Beschreibung

Die Erfindung bezieht sich auf eine Entladeschaltung für eine Zwischenkreisbatterie eines Spannungszwischenkreisumrichters, die eingangsseitig über einen Gleichrichter mit den Phasen eines Drehstromnetzes verbunden ist, wobei die Entladeschaltung aus zwei elektrisch in Reihe geschalteten Thyristoren besteht, wobei die Anode des einen Thyristors über einen Entladewiderstand mit dem Plus-Pol und die Kathode des anderen Thyristors über einen Entladewiderstand mit dem Minus-Pol der Zwischenkreisbatterie elektrisch leitend verknüpft sind.

Im Handel ist eine Schaltungsanordnung mit einem Pulswiderstand erhältlich, mit der die von einem Drehstrommotor generatorisch zurückgeführte Energie in den Spannungszwischenkreis eines Spannungszwischenkreisumrichters abgebaut werden kann. Bei übersynchronem Betrieb des an einen Spannungszwischenkreisumrichter eingesetzten Drehstrommotors wird die Energie aus der Maschine in den Zwischenkreis zurückgeliefert. Bei geregelter Zwischenkreisspannung steigt der Wert der Zwischenkreisbatterie über den Wert eines vorgegebenen Spannungswertes einer Spannungs-Frequenzkennlinie an. Bei einem Umrichter mit fester Zwischenkreisspannung steigt der Spannungswert der Zwischenkreisbatterie über die vom Drehstromnetz maximal angegebene Spannungshöhe an. Damit wächst die Zwischenkreisspannung über ihren zulässigen Wert. Bei einem Umrichter mit geregelter Zwischenkreisspannung kann die überschüssige Energie des Zwischenkreises über einen steuerbaren Drehstrombrückengleichrichter ins Netz zurückgespeist werden oder wie bei einem Umrichter mit starrer Zwischenkreisspannung mit Hilfe eines Pulswiderstandes in Wärme umgesetzt werden.

Dieser Pulswiderstand besteht aus einem ohmschen Widerstand und einem pulsbreitenmodulierbaren Chopper, der mittels einer Steuerschaltung gesteuert wird. Die Steuerschaltung erzeugt. aus einer Soll-Istwertdifferenz der Zwischenkreisspannung ein pulsbreitenmoduliertes Signal, woraus ein Haupt- und ein Löschimpuls erzeugt und auf ein vorbestimmtes Leistungsniveau verstärkt wird.

Eine gattungsgemäße Entladeschaltung für eine Zwischenkreisbatterie eines Spannungszwischenkreisumrichters ist aus der DE 31 36 694 A1 bekannt. Dabei ist der Mittelpunkt der Reihenschaltung der beiden Thyristoren mit einem Wechselspannungsanschluß eines ausgangsseitigen Wechselrichters des Spannungszwischenkreisumrichers elektrisch leitend verbunden. Alternativ können auch die beiden anderen Phasen des ausgangsseitigen Wechselrichtes mit Bremswiderständen und Bremsthyristoren versehen werden. Eine Steuerung zur Generierung von Zündsignalen für die Bremsthyristoren ist vorgesehen. Diese steuert den Bremsstrom in Abhängigkeit von der Zwischengleichspannung.

Der Erfindung liegt nun die Aufgabe zugrunde, eine netzgeführte Entladeschaltung für eine Zwischenkreisbatterie eines Spannungszwischenkreisumrichters anzugeben, wobei der Aufbau kostengünstig sein soll.

Diese Aufgabe wird erfindungsgemäß dadurch gelöst, daß ein Mittelpunkt der Reihenschaltung dieser Thyristoren mit einer Phase des Netzes elektrisch leitend verbunden ist und daß die Thyristoren in Abhängigkeit der Zwischenkreisspannung gleichzeitig mittels Steuersignale einer Steuerschaltung gezündet werden.

Dadurch, daß zwei elektrisch in Reihe geschaltete Thyristoren als Schaltelement vorgesehen sind, deren Mittelpunkt mit einer Phase eines Netzes elektrisch leitend verbunden ist, erhält man eine netzgeführte Entladeschaltung. Durch die Verbindung des Mittelpunktes der Thyristoren mit dem Netz wird der Kommutierungszeitpunkt vom Netz bestimmt. Außerdem stellt das Netz die Kommutierungsenergie zur Verfügung. Dadurch entfällt eine Kommutierungseinrichtung für jeden Thyristor, wodurch sich der Schaltungsaufbau dieser Entladeschaltung vereinfacht. Außerdem braucht die Steuerschaltung der Entladeschaltung nur noch Zündimpulse erzeugen, wodurch die Steuerschaltung sich ebenfalls vereinfacht. Somit erhält man einen kostengünstigeren Aufbau der netzgeführten Entladeschaltung für eine Zwischenkreisbatterie eines Spannungszwischenkreisumrichters.

Zur weiteren Erläuterung der Erfindung wird auf die Zeichnung Bezug genommen, in der ein Ausführungsbeispiel nach der Erfindung schematisch veranschaulicht ist.

FIG 1 zeigt einen Spannungszwischenkreisumrichter mit einer erfindungsgemäßen Entladeschaltung und in

FIG 2 ist in einem Diagramm eine Phasenspannung und Zwischenkreisspannungen über der Zeit t aufgetragen.

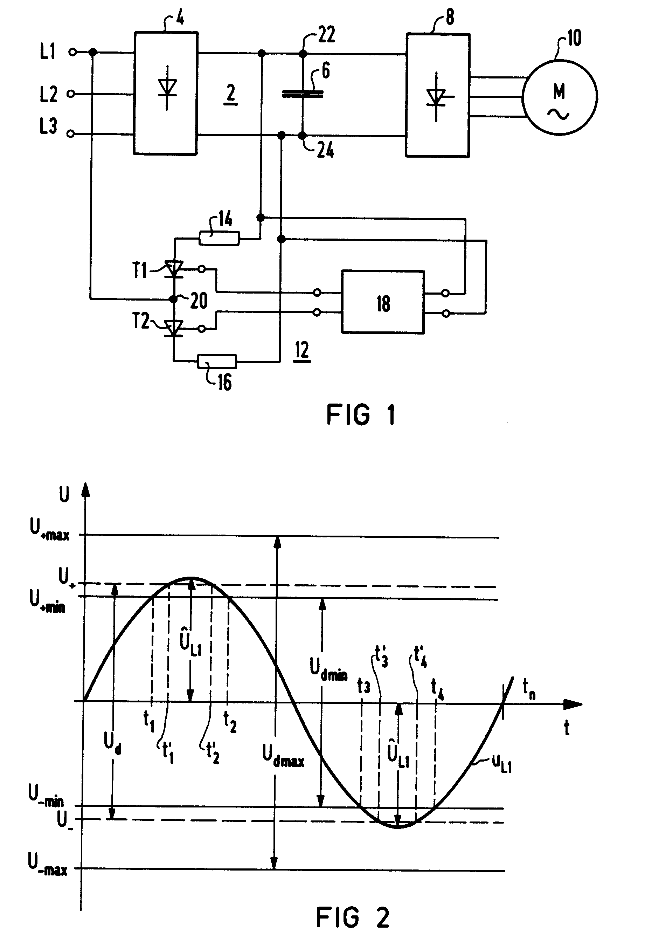

Die FIG 1 zeigt einen Spannungszwischenkreisumrichter 2, bestehend aus einem Gleichrichter 4, einer Zwischenkreisbatterie 6 und einem Wechselrichter 8 mit nachgeschalteter Drehstrommaschine 10. Der Gleichrichter 4 ist eingangsseitig mit den Phasen L1, L2 und L3 eines Drehstromnetzes verbunden. Als Gleichrichter 4 ist eine mit Stromrichterventilen aufgebaute Drehstrombrückenschaltung vorgesehen, die aus der dreiphasigen Wechselspannung eine Gleichspannung erzeugt. Diese Gleichspannung wird der Zwischenkreisbatterie 6 zugeführt und wird mit $U_{dmin}$ bezeichnet. Diese Zwischenkreisspannung $U_d$ wird eingangsseitig dem Wechselrichter 8 zugeführt, der in Abhängigkeit einer Steuerschaltung ein dreiphasiges Wechselspannungssystem

2

erzeugt. Als Wechselrichter 8 ist eine mit Stromrichterventilen aufgebaute Drehstrombrückenschaltung vorgesehen, damit die Energie aus der Zwischenkreisbatterie 6 zum Drehstrommotor 10 und umgekehrt fließen kann.

Außerdem ist eine Entladeschaltung 12, bestehend aus zwei Thyristoren T1 und T2, zwei Entladewiderständen 14 und 16 und einer Steuerschaltung 18, vorgesehen. Die beiden Thyristoren T1 und T2 sind elektrisch in Reihe geschaltet, wobei deren Mittelpunkt 20 elektrisch leitend mit der Phase L1 des Drehstromnetzes verbunden ist. Die Anode des Thyristors T1 ist über den Entladewiderstand 14 mit dem Plus-Pol 22 der Zwischenkreisbatterie 6 elektrisch leitend verbunden. Die Kathode des Thyristors T2 ist über den Entladewiderstand 16 mit dem Minus-Pol 24 der Zwischenkreisbatterie 6 elektrisch leitend verbunden. Die Steuerschaltung 18 ist eingangsseitig mit den Anschlußklemmen 22 und 24 der Zwischenkreisbatterie 6 und ausgangsseitig mit den Zündelektroden der Thyristoren T1 und T2 elektrisch leitend verbunden.

Anhand des Diagramms nach FIG 2 wird die Funktionsweise der Entladeschaltung 12 nach FIG 1 erläutert. In FIG 2 ist eine Phasenspannung $u_{L1}$ des Drehstromnetzes über der Zeit t aufgetragen. Außerdem ist eine Mindest- bzw. Maximalzwischenkreisspannung $U_{dmin}$ bzw. $U_{dmax}$ mittels einer positiven und negativen Gleichspannung $U_{+min}$ und $U_{-min}$ bzw. $U_{+max}$ und $U_{-max}$ über der Zeit t dargestellt. Aus den drei Phasenspannungen $u_{L1}$, $u_{L2}$ und $u_{L3}$, von denen aus Übersichtlichkeitsgründen nur die Phasenspannung $u_{L1}$ dargestellt ist, wird eine Mindestzwischenkreisspannung $U_{dmin}$ erzeugt, deren Wert kleiner ist als der doppelte Spannungsscheitelwert $U_{L1}$. Bei übersynchronem Betrieb des am Spannungszwischenkreisumrichters 2 eingesetzten Drehstrommotors 10 wird Energie aus der Maschine 10 in die Zwischenkreisbatterie 6 zurückgeliefert, wodurch der Wert der Zwischenkreisspannung $U_d$ ansteigt. Dieser Anstieg der Zwischenkreisspannung $U_d$ wird von der Steuerschaltung 18 erfaßt und überwacht. Sobald die Zwischenkreisspannung $U_d$ einen maximalen Wert $U_{dmax}$ erreicht hat, werden die Thyristoren T1 und T2 der Entladeschaltung 12 gleichzeitig gezündet, wodurch die überschüssige Energie der Zwischenkreisbatterie mit Hilfe der Entladewiderstände 14 und 16 in Wärme umgesetzt wird. Dadurch sinkt der Wert der Zwischenkreisspannung $U_d$ ab. Sobald die positive und negative Amplitude der Phasenspannung $u_{L1}$ größer ist als die Zwischenkreisspannung $U_d$, werden die Thyristoren T1 und T2 während einer Netzperiode $t_n$ gelöscht. Dabei wird während der Zeitdifferenz $t_2 - t_1$ der Thyristor T1 gelöscht, da das Potential des Mittelpunktes 20 gegenüber dem Plus-Pol 22 der Zwischenkreisbatterie 6 positiver ist. Während der Zeitdifferenz $t_4 - t_3$ wird der Thyristor T2 gelöscht, da das Potential des Mittelpunktes 20 gegenüber dem Minus-Pol 24 der Zwischenkreisbatterie 6 negativer ist. In Abhängigkeit der Zündimpulse wird jeweils der Kommutierungszeitraum festgelegt. Wenn beispielsweise die Zündimpulslänge nur zur sicheren Zündung der Thyristoren T1 und T2 bemessen ist, erfolgt die Löschung der Thyristoren T1 und T2 innerhalb einer Netzperiode, sobald die positive und negative Amplitude der Phasenspannung $u_{L1}$ größer ist als der Wert der positiven und negativen Gleichspannung $U_+$ und $U_-$, deren Differenz der Zwischenkreisspannung $U_d$ entspricht und die Zeitdifferenz $t_2' - t_1'$ bzw. $t_4' - t_3'$ größer ist als die vom Thyristortyp abhängige Freiwerdezeit. Wenn jedoch die Thyristoren T1 und T2 erst bei einer vorbestimmten Zwischenkreisspannung $U_{dmin}$ gelöscht werden sollen, so muß entweder die Zündimpulslänge dementsprechend bemessen sein oder die Steuerschaltung 18 erzeugt für die Thyristor T1 und T2 ein Zündimpulspaket.

Somit kann man mit einem kostengünstigeren Aufbau einer Entladeschaltung 12 die Zwischenkreisspannung $U_d$ eines Zwischenkreisumrichters 2 beliebig bestimmen. Außerdem kann man mit dieser Entladeschaltung 12 bei Abschaltung des Umrichters 2 eine Schnellentladung der Zwischenkreisbatterie 6 vornehmen.

## Patentansprüche

1. Entladeschaltung (12) für eine Zwischenkreisbatterie (6) eines Spannungszwischenkreisumrichters (2), die eingangsseitig über einen Gleichrichter (4) mit den Phasen (L1,L2,L3) eines Drehstromnetzes verbunden ist, wobei die Entladeschaltung (12) aus zwei elektrisch in Reihe geschaltete Thyristoren (T1,T2) besteht, wobei die Anode des einen Thyristors (T1) über einen Entladewiderstand (14) mit dem Plus-Pol (22) und die Kathode des anderen Thyristors (T2) über einen Entladewiderstand (16) mit dem Minus-Pol (24) der Zwischenkreisbatterie (6) elektrisch leitend verknüpft sind, **dadurch gekennzeichnet**, daß ein Mittelpunkt (20) der Reihenschaltung dieser Thyristoren (T1, T2) mit einer Phase (L1) des Netzes elektrisch leitend verbunden ist und daß die Thyristoren (T1, T2) in Abhängigkeit der Zwischenkreisspannung ($U_d$) gleichzeitig mittels Steuersignale einer Steuerschaltung (18) gezündet werden.

## Claims

1.Discharge circuit (12) for an intermediate circuit battery (6) of a voltage converter with an intermediate circuit (2), which on the input side is connected by means of a rectifier (4) to the phases (L1,L2,L3) of a three-phase system, with the discharge circuit (12) comprising two thyristors (T1,T2) connected electrically in series, with the anode of the one thyristor (T1) being linked in an electroconductive manner via a discharge resistor (14) to the positive pole (22) and the cathode of the other thyristor (T2) being linked in an electroconductive manner via a discharge resistor (16) to the negative pole (24) of the intermediate circuit battery (6), characterized in that a centre point (20) of the series connection of the thyristors (T1, T2) is connected in an electroconductive manner to a phase (L1) of the system and in that the thyristors (T1, T2) are fired in dependence upon the intermediate circuit voltage ($U_d$) and at the same time by means of control signals from a control circuit (18).

**Revendications**

1. Circuit de décharge (12) pour une batterie (6) du circuit intermédiaire d'un convertisseur statique (2) à circuit intermédiaire de tension, qui est raccordé, côté entrée, par l'intermédiaire d'un redresseur (4), aux phases (L1,L2,L3) d'un réseau triphasé, le circuit de décharge (12) étant constitué de deux thyristors (T1,T2) montés électriquement en série, l'anode d'un thyristor (T1) étant raccordée d'une manière électriquement conductrice, par l'intermédiaire d'une résistance de décharge (14), au pôle positif (22) de la batterie (6) du circuit intermédiaire, tandis que la cathode de l'autre thyristor (T2) est raccordée d'une manière électriquement conductrice, par l'intermédiaire d'une résistance de décharge (16), au pôle négatif (24) de la batterie (6), caractérisé par le fait qu'un point médian (20) du circuit série formé par ces thyristors (T1,T2) est raccordé d'une manière électriquement conductrice à une phase (L1) du réseau et que les thyristors (T1,T2) sont amorcés simultanément, en fonction de la tension ($U_d$) du circuit intermédiaire, au moyen des signaux d'un circuit de commande (18).

FIG 1

FIG 2